(19) Europäisches Patentamt
European Patent Office
Office européen des brevets

(11) **EP 1 207 372 B1**

(12) **EUROPÄISCHE PATENTSCHRIFT**

(45) Veröffentlichungstag und Bekanntmachung des Hinweises auf die Patenterteilung:
**30.03.2011 Patentblatt 2011/13**

(51) Int Cl.:
***G01D 5/244*** *(2006.01)*

(21) Anmeldenummer: **01124466.2**

(22) Anmeldetag: **11.10.2001**

(54) **Verfahren und Vorrichtung zur Konditionierung eines periodischen Analogsignals**

Method and device for conditioning a periodic analog signal

Procédé et appareil pour le conditionnement d'un signal analogique périodique

(84) Benannte Vertragsstaaten:
**DE FR GB IT**

(30) Priorität: **20.11.2000 DE 10056926**

(43) Veröffentlichungstag der Anmeldung:
**22.05.2002 Patentblatt 2002/21**

(73) Patentinhaber: **Dr. Johannes Heidenhain GmbH
83301 Traunreut (DE)**

(72) Erfinder:
• **Freitag, Hans-Joachim
 07749 Jena (DE)**
• **Franz, Heinz-Günther
 22359 Hamburg (DE)**
• **Schmidt, Andreas
 99089 Erfurt (DE)**

(56) Entgegenhaltungen:
**EP-A1- 0 599 175      WO-A1-00/60314
DE-A1- 19 548 172      US-A- 4 458 322**

**Beschreibung**

Die Erfindung bezieht sich auf ein Verfahren gemäß dem Obergegriff des Anspruchs 1 und eine Vorrichtung gemäß dem Oberbegriff des Anspruch 8, jeweils zur Konditionierung eines periodischen Analogsignals auf vorbestimmte positive und negative Spitzensollwerte.

Zur Positionsmessung, insbesondere bei der Erfassung von Wegstrecken, Drehzahlen oder Drehwinkeln, werden inkrementelle Meßsysteme mit Sensoren eingesetzt, die zwei alternierende elektrische periodische Signale liefern, welche um 90° phasenverschoben zueinander sind. Solche Signale werden auch als orthogonal bezeichnet. Der Sensor fühlt in der Regel eine Maßverkörperung ab, beispielsweise eine. Markierungen aufweisende Kodescheibe oder ein Kodelineal. Die erzeugten Signale sind meist sinusförmig, können aber auch dreieckförmig oder trapezförmig sein. Im folgenden wird zur Vereinfachung von Sinus- und Kosinus-Signal gesprochen. Die Amplituden der Signale schwanken exemplarisch, sind alterungsabhängig, abhängig von der Arbeitsfrequenz, der Temperatur, der Versorgungsspannung und unterliegen der Beeinflussung der Maßverkörperung. Diese Einflüsse können dazu führen, daß der Signalhub schwankt; man spricht dann von Amplitudenschwankungen. Es ist aber auch ein variabler Offset möglich. Schließlich können auch Phasenfehler auftreten, insbesondere durch geometrische oder mechanische Ablagen oder Veränderungen der Sensoren bezüglich der abgetasteten Maßverkörperung.

Um bei solchen inkrementellen Meßsystemen eine Synchronisation zu erreichen, ist oftmals noch ein Synchronisationssignal vorgesehen, das aufgrund seiner asymmetrischen, periodischen Signalform eine Synchronisation der alternierenden Signale zur Maßverkörperung und somit eine eindeutige Definition eines Koordinatensystems ermöglicht.

Fehlerhafte elektrische Signale schränken die Leistungsfähigkeit solcher Meßsysteme stark ein und führen dazu, daß die erfaßten Wegstrecken, Drehzahlen oder Drehwinkel fehlerbehaftet sind.

Ein Verfahren zur Ausregelung der erwähnten Amplitudenschwankungen ist aus der DE-PS 38 43 108 bekannt. Dabei werden positive und negative Spitzenwerte des Sinus- und Kosinussignals jeweils darauf hin überwacht, ob der Spitzenwert in einem gewissen Fenster liegt. Ist es nicht der Fall, wird das Signal entweder durch geeignete Verstärkung oder durch geeignete Addition korrigiert. Die Art der Korrektur wird dabei in der aktuellen Halbwelle abhängig davon gewählt, ob das Fenster nach oben oder unten verlassen wurde, bzw. welche Korrektur in der vorhergehenden Halbwelle vorgenommen wurde. Deshalb werden bei größeren Signalfehlern viele Perioden zur Konditionierung der Signale benötigt. Das kann insbesondere bei der Erstkalibrierung nach dem Einschalten von Nachteil sein oder diese sogar ganz unmöglich machen. Eine Digitalschaltung für dieses Verfahren ist aus des US - PS 4.458.322 bekannt.

In der EP-PS 0 489 936 wird eine Weiterbildung des in der DE-PS 38 43 108 beschriebenen Verfahrens angegeben, um den zur Durchführung des Verfahrens nötigen Schaltungsaufwand zu reduzieren.

In der DE-A 197 12 622 werden eine Anordnung und ein Verfahren zur Korrektur fehlerbehafteter Abtastsignale inkrementaler Meßeinrichtungen beschrieben. Dabei wird zur Signalkonditionierung ein Mikroprozessor eingesetzt, der Korrekturgrößen in einer Regelschleife ermittelt, um eine höhere Genauigkeit zu erreichen.

Aus der Veröffentlichung "Die neue Dimension in der Weg- und Winkelmeßtechnik", R. Burgschat, F & M, Feintechnik, Mikrotechnik, Mikroelektronik, Heft 10, 1996, ist zur Signalkorrektur der Einsatz von Digitalpotentiometern in einem ASIC bekannt.

Aus der DE-A 42 42 145 ist es bekannt, eine Phasenfehlerkorrektur Sinus- und Kosinusförmiger Signale zu erreichen, indem durch Summation und Subtraktion der beiden Signale weitere Sinus- und Kosinus-förmige Signale erhalten werden, die dann nicht mehr den statistischen Phasenfehler aufweisen, sondern exakt 90° Phasenabstand haben.

Die EP-A 0 599 175 beschreibt eine Interpolationschaltung für inkementelle repsysteme. Aus der DE-A 19548172 ist ein Verfahren zur verzerrungsfreien Amplitudenbegrenzung elektrischer Signale bekannt. Die WO-A-00/60314 schildert ein Verfahren gemäß dem Oberbegiff des Anspruchs 1.

Der Erfindung liegt die Aufgabe zugrunde, ein Verfahren und eine Vorrichtung zur Konditionierung eines periodischen Analogsignals auf vorbestimmte positive und negative Spitzensollwerte anzugeben, so daß eine Korrektur innerhalb weniger Signalperioden erreichbar ist und auf einen Mikroprozessor verzichtet werden kann.

Die Aufgabe wird mit einem Verfahren gemäß Anspruch 1 gelöst. Zur Konditionierung eines periodischen Analogsignals wird die Differenz zwischen Spitzenistwert und vorbestimmtem Spitzensollwert schrittweise durch mehrmalige Veränderung des Signals mittels Veränderungsschritten innerhalb einer Teilperiode des Signals verringert und idealerweise ausgeglichen, wobei jeder Veränderungsschritt genau einen multiplikativen und genau einen additiven Korrekturschritt beinhaltet.

Nach Detektion eines Spitzenistwertes des Signales wird die Differenz zum vorbestimmten Spitzensollwert nun nicht mehr über mehrere Perioden hinweg langsam ausgeglichen, indem in jeder Halbperiode ein Veränderungsvorgang durchgeführt wird, sondern es wird eine Vielzahl von Veränderungsschritten ausgeführt. Jeder Veränderungsschritt besteht aus genau zwei Korrekturschritten, einem multiplikativen Korrekturschritt, der den Signalhub vergrößert oder verkleinert, und einem additiven Korrekturschritt, der zum Signal eine positive oder negative Konstante hinzuaddiert, mithin den Signalpegel verändert. Vorzugsweise erfolgen die zwei Korrekturschritte simultan. Dieses Vorgehen bietet den Vorteil einer schnellen Signalkonditionierung.

Mit jedem Veränderungsschritt wird das Signal also in zweifacher Hinsicht verändert: Zum einen wird es multiplikativ, zum anderen additiv korrigiert. In einem Veränderungsschritt erfolgen immer beide Korrekturen. Die multiplikativen bzw. additiven Korrekturschritte können prinzipiell frei gewählt werden, sind jedoch vorzugsweise fest eingestellt. Im inkrementellen Vorgehen sind dann also vier verschiedene Veränderungsschritte möglich: ein vergrößernder multiplikativer Korrekturschritt in Kombination mit einem additiven Korrekturschritt in positiver Richtung, ein vergrößernder multiplikativer Korrekturschritt in Kombination mit einem additiven Korrekturschritt in negativer Richtung, ein verkleinernder multiplikativer Korrekturschritt in Kombination mit einem additiven Korrekturschritt in positiver Richtung und ein verkleinernder multiplikativer Korrekturschritt in Kombination mit einem additiven Korrekturschritt in negativer Richtung. Welche Art von Vergrößerungsschritt nun verwendet wird, hängt zweckmäßigerweise davon ab, wie der aktuelle Spitzenistwert zum vorbestimmten Spitzensollwert liegt und in welcher Teilperiode der Spitzenistwert detektiert wurde. Es erfolgt in einer getakteten Arbeitsweise eine Veränderung des Signals und Vergleich des Spitzenistwertes mit der Spitzensollspannung, bis die erfolgte Konditionierung oder ein Abbruchkriterium erreicht wird. Das konditionierende Signal konvergiert besonders schnell auf die Zielwerte, wenn die Zusammensetzung eines Veränderungsschrittes aus multiplikativem und additivem Korrekturschritt nach folgender Tabelle gewählt wird.

| Teilperiode | Spitzenistwert | Veränderungsschritt | |
|---|---|---|---|
| | | multiplikativer Korrekturschritt | additiver Korrekturschritt |
| positiv | Spitzensollwert | -1 | -1 |
| positiv | Spitzensollwert | +1 | +1 |
| negativ | Spitzensollwert | -1 | +1 |
| negativ | Spitzensollwert | +1 | -1 |

In dieser Tabelle wird unter einer positiven/negativen Teilperiode eine solche Teilperiode verstanden, in der das Signal größer/kleiner Null ist. Die Einträge "-1" und "+1" in der Spalte für den multiplikativen bzw. additiven Korrekturschrittes geben an, ob es sich um einen vergrößernden oder verkleinernden multiplikativen bzw. einen additiven Korrekturschritt in positiver oder negativer Richtung handelt.

Besonders einfach ist das Verfahren dann auszuführen, wenn die Frequenz, mit der die schrittweise Veränderung durchgeführt wird, groß gegen die Bandbreite des Signals ist, da dann beim Durchführen der Veränderungen davon ausgegangen werden kann, daß der zum Vergleich mit dem Spitzensollwert herangezogene Signalwert im wesentlichen unverändert ist.

Kann diese Anforderung nicht erfüllt werden, beispielsweise, weil schnell veränderliche Signale konditioniert werden sollen, muß der Spitzenistwert zum Vergleich, ob Konvergenz erreicht wurde, zwischengespeichert werden, beispielsweise in einem Peakwertdetektor mit Sample-and-hold-Glied, da ansonsten das Signal sich während der Abfolge der Veränderungsschritte zu stark vom Spitzenistwert entfernen würde. Natürlich muß dann nicht nur das Signal mit den Veränderungsschritten verändert werden, sondern auch der zwischengespeicherte Wert, der zum Konvergenzvergleich verwendet wird, da ansonsten nicht festgestellt werden könnte, wann eine die Konvergenz anzeigende Übereinstimmung zwischen Spitzenistwert und Spitzensollwert erreicht ist. Daraus folgt, daß die Genauigkeit des zwischengespeicherten Spitzenistwertes bzw. der Veränderung dieses Spitzenistwertes gewisse Anforderungen erfüllen müssen, insbesondere sind Abweichungen im Fehlerverhalten zwischen zwischengespeichertem Spitzenistwert und tatsächlichem Signal nachteilig.

In einer bevorzugten Ausführungsform ist deshalb vorgesehen, daß nach Schritt a) ein Referenzsignal ausgehend vom vorbestimmten Spitzensollwert schrittweise auf den Spitzenistwert gestellt wird, wobei die Zahl der nötigen Stellschritte gezählt wird und danach das Signal um ebensoviele Veränderungsschritte verändert wird, wobei die Größe eines Veränderungsschrittes der eines Stellschrittes entspricht.

In dieser Weiterbildung wird also ein Referenzsignal ausgehend vom Spitzensollwert auf den Spitzenistwert schrittweise hingeführt und die dazu nötige Anzahl von Stellschritten gezählt. Ein Stellschritt ist dabei so gewählt, daß er der Größe nach einem Veränderungsschritt entspricht. Nachdem das Referenzsignal an den Sollwert herangeführt wurde, wird das zu konditionierende Signal um ebensoviele Veränderungsschritte verändert. Bei diesem Verfahren wird also zur Fehlererfassung zuerst die Referenzspannung dem Spitzenistwert angenähert, bis die beiden übereinstimmen. Erst anschließend erfolgt zur Fehlerkorrektur eine entsprechende Veränderung des Signals. Fehlererfassung und Fehlerkorrektur sind also zeitlich voneinander getrennt. Da darüber hinaus das Referenzsignal verändert wird, kann auch bei hohen Frequenzen des zu konditionierenden Signals eine einfache Speicherung des Spitzenistwertes vorgenommen werden, ohne daß dieser Wert veränderbar sein müßte. Besonders zweckmäßig ist es, die Korrektur bei geringem Signalistwert durchzuführen, insbesondere in einem Nulldurchgang des periodischen Signals.

Gänzlich ohne Speicherung des Spitzenistwertes kommt man, wie oben erwähnt, aus, wenn die Veränderungsschritte mit einer Frequenz ausgeführt werden, die größer als die Signalbandbreite ist. Das Verfahren erfordert dann weniger Schaltungsaufwand.

Liegen zwei zu konditionierende Signale vor, die orthogonal, d. h. um 90° zueinander phasenverschoben sind, kann das Vorliegen des Spitzenwertes eines Signales am Nulldurchgang des anderen Signales erkannt werden.

Die Weiterbildung mit der Anpassung eines Referenzsignals zur Konditionierung zweier, orthogonaler Signale (im folgenden Sinus-Signal und Kosinus-Signal) folgt vorteilhafterweise derart, daß ausgelöst durch den Nulldurchgang des Sinus-Signals der Spitzenistwert des Kosinus-Signals mit der Referenzspannung verglichen wird, und diese ausgehend vom vorgegebenen Spitzensollwert getaktet in gleich großen Schritten dem Spitzenistwert angenähert wird, bis die beiden gleich sind. Die Anzahl und Richtung der erforderlichen Stellschritte zur Anpassung der Referenzspannung wird gezählt und gespeichert. Ausgelöst durch den Nulldurchgang des Kosinus-Signals wird nun die gleiche Anzahl getakteter Veränderungsschritte bestehend aus multiplikativem und additivem Korrekturschritt auf das Kosinus-Signal angewendet, so daß dieses Signal geeignet konditioniert ist. Der Nulldurchgang des Kosinus-Signals löst gleichzeitig die beschriebene getaktete Anpassung der Referenzspannung an den mittlerweile gespeicherten Spitzenistwert des Sinus-Signals aus.

Diese getaktete Arbeitsweise hat zum einen den Vorteil, daß durch die bekannte Verzögerungszeit zwischen Verstellung der Referenzspannung und Vergleich des aktuellen Referenzsignalwertes mit dem Spitzenistwert (eine Taktperiode) genaue Aussagen über die dynamischen Grenzen des Verfahrens möglich sind. Weiter erfolgt die Erfassung des Nulldurchgangs des einen Signals und die Abtastung des Spitzenistwertes des anderen Signals zur gleichen Zeit. Schließlich ist durch die von der Fehlererfassung getrennte Fehlerkorrektur ein Überschwingen des Konditioniervorgangs vermieden.

Zweckmäßigerweise ist das Anpassen der Referenzspannung an den gespeicherten Spitzenistwert erst beendet, wenn die Annäherung erreicht ist. Bei optimaler Auslegung werden dann maximal zwei Perioden zur vollständigen Konditionierung eines Sinus- oder Kosinus-Signals unabhängig von der Größe des Signalfehlers benötigt. Es ist aber auch möglich, nach einer gewissen Zeitdauer oder Anzahl an Veränderungsschritten abzubrechen.

Damit das Verfahren allerdings in der Konditionierung des Analogsignals auf den gewünschten Spitzensollwerte konvergiert und darüber hinaus nur eine endliche Anzahl von Vorgängen nötig ist, sind an die Gewichtung von multiplikativem und additivem Korrekturschritt gewisse Forderungen zu stellen. Ansonsten liegen nicht die erwähnten optimalen Bedingungen vor.

Besonders zweckmäßig ist es, wenn das Inkrement eines Stellschrittes bei der Fehlererfassung möglichst gleich dem aus multiplikativem und additivem Korrekturschritt bestehenden Veränderungsschritt bei der Fehlerkorrektur ist. Eine vollständige Übereinstimmung ist aber nicht notwendig, da der Vorgang iterativ abläuft und dabei eine Aufsummierung von Abweichungen zwischen Fehlererfassung und Fehlerkorrektur nicht auftreten kann. Nur bei Abweichungen größer 50 % zwischen Stellschritt und Veränderungsschritt ist am Ende eine Abweichung von maximal einem Schritt möglich; beträgt der Unterschied unter 50 %, liegt am Ende keine Abweichung vor, da "abgerundet" wird.

Durch die Verwendung der gespeicherten Spitzenistwerte anstelle der Momentanwerte der Sinus- und Kosinus-Signale ist vorteilhafterweise eine fehlerfreie Funktion sowohl für kleine Frequenzen (Stillstand) als auch für große Frequenzen gewährleistet. Bei kleinen Frequenzen muß nur der Nulldurchgang des einen Signals sehr genau erfaßt werden, um sicher im Maximum des anderen Signals zu liegen. Die normalerweise unvermeidliche Selbstentladung von zur Speicherung zu verwendenden Haltekondensatoren ist hierbei unschädlich, weil bei kleinen Frequenzen das Ausgangssignal der Speicherung dem Eingangssignal, dessen Spitzenwert gespeichert werden soll, folgt. Die genaue Erfassung des Nulldurchgangs stellt für kleine Frequenzen kein Problem dar, da die Zeitabläufe entsprechend langsam und somit vernachlässigbar sind. Bei größeren Frequenzen, bei denen diese Zeitabläufe nicht vernachlässigbar sind, ist dagegen die korrekte Funktion der Spitzenwertspeicherung gewährleistet und demzufolge eine exakte Bewertung der Spitzenistwerte auch in der Umgebung eines Nulldurchgangs möglich, da der zwischen Spitzenwert und Nulldurchgang nur eine geringe Zeitspanne liegen kann.

Durch Verwendung der Spitzenwertdetektoren mit Speicherfunktion wird somit gewissermaßen ein selbsttätig fließender Übergang zwischen zeitlich genauer Abtastung des Signales und zeitlich ungenauer Abtastung des gespeicherten Spitzenistwertes ermöglicht. Eine prinzipielle Grenze des Verfahrens liegt natürlich darin, daß bei vorgegebener Schrittfrequenz nur eine bestimmte Anzahl von Verstellschritten innerhalb einer Teilperiode stattfinden kann. Selbst bei idealer Funktion der Spitzenwertdetektoren muß beim Erreichen des entgegengesetzten Spitzenistwertes der laufende Verstellvorgang abgebrochen werden, um den nächsten zu beginnen. Damit sollte die Taktfrequenz der Verstellschritte bei etwa einem Viertel der Signalfrequenz liegen, da dann pro Teilperiode noch zwei Verstellschritte ausgeführt werden können.

Da ein Veränderungsschritt sowohl eine multiplikative als auch eine additive Korrektur enthalten, mithin auf Amplitude und Offset gleichermaßen wirkt, wird, abgesehen von Fällen eines reinen Offset- bzw. einen reinen Amplitudenfehlers, eine schnelle Konvergenz der Konditionierung gewährleistet. Dabei bestimmt das Produkt aus Größe eines Verstellschrittes und Anzahl der in einer Teilperiode möglichen Schritte den in der Teilperiode möglichen Abgleichbereich.

Die gemäß einer vorteilhaften Verfahrensweiterbildung vorgesehene Durchführung der Fehlerkorrektur nahe eines Nulldurchgangs des Signales ermöglicht eine nahezu unbemerkte Nachführung, insbesondere bei langsamer Signalveränderung, da bei einer Korrektur in oder nahe des Nulldurchgangs nur die additiven Bestandteile eines Veränderungsschrittes zu Sprüngen im Signalverlauf führen, die multiplikativen Anteile im Nulldurchgang jedoch nicht merklich sind.

Bei manchen Meßsystemen ist zusätzlich zu zwei orthogonalen (Sinus- und Kosinus-) Signalen noch ein Synchronisationssignal vorhanden, das zwar periodisch, jedoch asymmetrisch periodisch ist. In der Regel handelt es sich um einen einmal mit einer gewissen Periode wiederkehrenden Gauss-Puls, d. h. das Synchronisationssignal ist bis auf den Puls immer gleich dem negativen Spitzenwert. Ein solches Synchronisationssignal kann ebenfalls unter Verwendung des erfindungsgemäßen Verfahrens konditioniert werden. Dabei wird davon ausgegangen, daß das Synchronisationssignal sein Maximum genau in einem positiven Schnittpunkt der beiden orthogonalen (Sinus- und Kosinus-) Signale hat. An den benachbarten Schnittpunkten der positiven Halbwellen der orthogonalen Signale liegt dagegen der negative Spitzenwert des Synchronisationssignals vor. Die Konditionierung erfolgt nun in Analogie zur Konditionierung der orthogonalen Signale, indem als auslösendes Ereignis zur Bestimmung des Spitzenistwertes der positive Schnittpunkt der beiden orthogonalen (Sinus- und Kosinus-) Signale in der positiven Teilperiode des Synchronisationssignales verwendet wird. Ausgehend von diesem Zeitpunkt kann dann die beschriebene erfindungsgemäße Konditionierung erfolgen, in diesem Fall auf den positiven Spitzenistwert. Die Schnittpunkte der positiven Halbwellen der orthogonalen (Sinus- und Kosinus-) Signale, bei denen das Synchronisationssignal sich in der negativen Teilperiode befindet, können zum Auslösen der Korrektur auf den negativen Spitzensollwert verwendet werden.

Das erfindungsgemäße Verfahren kann vorteilhaft auch auf eine Phasenkorrektur zur Signalkonditionierung der orthogonalen Signale angewendet werden. Dabei wird die Phasenablage, die sich aus der zeitlichen Beziehung vom Nulldurchgang des einen und Spitzenwert des anderen Signals ergibt, in eine Amplitudeninformation transformiert, die dann durch geeigneten Amplitudenvergleich detektiert werden kann. Dies erfolgt bevorzugt dadurch, daß die mit einem Faktor von $\sqrt{2}\,/\,2$ bewerteten konditionierten Sinus- und Kosinus-Signale additiv überlagert werden, wodurch ein neues sinusförmiges Signal entsteht. Die Differenz zwischen dessen Spitzenistwert zum Spitzensollwert des Sinus- oder Kosinus-Signals ist ein Maß für den Fehler der Phasendifferenz der orthogonalen Signale. Aus dem erfindungsgemäß durchgeführten Vergleich des Spitzenistwertes dieses so gewonnenen Hilfssignals mit dem Spitzensollwert des Sinus- oder Kosinus-Signales wird zweckmäßigerweise die Richtung zur Inkrementierung eines Phasenstellgliedes gewonnen, das dann direkt angesteuert werden kann. Zur inkrementellen Phasenverschiebung eines der beiden Sinus- oder Kosinus-Signale mit dem Zweck der Korrektur der Phasenbeziehung der beiden Signale kann eines der beiden Signale dann als Bezugssignal betrachtet werden, so daß die Phasenkorrektur nur am anderen, dem zweiten Signal, vorgenommen werden muß. Die Wahl des Bezugssignals ist dabei willkürlich.

Die Phasenkorrektur kann man besonders einfach dadurch bewirken, daß ein gewichteter Anteil des Signals des Bezugssignals durch analoge Summation dem verbleibenden zweiten Signal überlagert wird, wodurch das daraus resultierende Signal eine geänderte Phasenlage hat.

Die eingangs erwähnte Aufgabe wird weiter gelöst durch eine Vorrichtung gemäß Anspruch 8. Es ist vorgesehen eine Vorrichtung zur konditionierung eines periodischen Analogsignals auf vorbestimmte, positive und negative Spitzensollwerte mit einer Amplituden- und Offsetstelleinrichtung, der das Signal zugeführt ist und die an ihrem Ausgang das Signal verstärkt oder abgeschwächt und mit erhöhtem oder erniedrigtem Signalpegel abgibt, einem Spitzenwertdetektor, der das Signal zugeführt erhält und der am Ausgang den letzten Spitzenistwert solange abgibt, bis der über einen Rücksetzeingang zurückgesetzt wird, einer über einen Steuereingang verstellbaren Referenzspannungsquelle und einer Steuerschaltung, die mit dem Steuereingang der Referenzspannungsquelle verbunden ist, diese in Stellschritten von einem vorbestimmten, dem Spitzensollwert entsprechendem Wert auf den vom Spitzenwertdetektor am Ausgang abgegebenen Spitzenistwert verstellt, die Zahl und Richtung der Stellschritte in zwei Speicherelementen speichert und dann die Amplituden- und Offsetstellvorrichtung abhängig von der gespeicherten Zahl und Richtung schrittweise simultan verstellt.

Diese Schaltung, die insbesondere zur Durchführung des oben erläuterten Verfahrens dient, hat den Vorteil, daß sie ohne aufwendige Mikroprozessoren auskommt und lediglich einfache, kostengünstige Bauelemente benötigt. Weiter ist sie modular, da die verwendeten Elemente, Amplituden- und Offsetstellvorrichtung, Spitzenwertdetektor, Referenzspannungsquelle und Steuerschaltung in identischer Bauweise auch entsprechend für mehrere zu konditionierende Analogsignale vorgesehen werden können.

Eine besonders zweckmäßige Weiterbildung dieser Schaltung liegt darin, einen Vergleichskomparator vorzusehen, der mit dem Ausgang der Referenzspannungsquelle und des Spitzenwertdetektors verbunden ist. Der logische Zustand am Ausgang des Vergleichskomparators zeigt der Steuerschaltung an, ob die an den Eingängen des Vergleichskomparators anliegenden Signale gleich sind, mithin ob die Annäherung des von der Referenzspannungsquelle abgegebenen Signals an die vom Spitzenwertdetektor gespeicherten Spitzenistwerte erfolgte.

Soll die erwähnte Schaltung zur Konditionierung zweier orthogonaler Signale eingesetzt werden, ist es besonders zweckmäßig, für jeden Signalkanal einen Nullwertdetektor vorzusehen. Die Nullwertdetektoren sind mit ihren Ausgängen dann jeweils mit den Steuerschaltungen des anderen Signalkanals verbunden, so daß ein von einem Nullwertdetektor detektierter Nullwert eines Signalkanals der Steuerschaltung des anderen Signalkanals das Vorliegen eines Spitzenwertes im anderen Signalkanal anzeigt.

Zur Signalkonditionierung von drei Signalen, bei denen zwei orthogonale Signale und das dritte ein Synchronisationssignal der erwähnten Art sind, ist in einer besonders bevorzugten Weiterbildung eine Schaltung vorgesehen, die zur Konditionierung des Synchronisationssignales eine weitere Amplituden- und Offsetstellvorrichtung, einen weiteren Spitzenwertdetektor, einen weiteren Nullwertdetektor, eine weitere verstellbare Referenzspannungsquelle, eine weitere Steuerschaltung sowie einen Pegelkomparator, dem die zwei orthogonalen Signale zugeführt werden, aufweist, wobei die Steuerschaltung die weitere Referenzspannungsquelle erst dann auf den vom Spitzenwertdetektor abgegebenen Spitzenistwert stellt, wenn der Pegelkomparator gleichen Pegel der beiden Signale anzeigt.

Dadurch kann unter Ausnutzung der erwähnten Modularität auch ein Synchronisationssignal mit einfachen Schaltungsmitteln konditioniert werden.

Das erfindungsgemäße Verfahren sowie die erfindungsgemäße Vorrichtung sind nicht auf den Einsatz bei der Konditionierung zweier, insbesondere orthogonaler Signale beschränkt. Es kann auch nur ein Signal konditioniert werden. Daß ein Spitzenwert vorliegt, muß dann geeignet festgestellt werden, beispielsweise durch eine Gradientenanalyse.

Die Erfindung wird nachfolgend unter Bezugnahme auf die Zeichnungen in einem Ausführungsbeispiel näher erläutert. In der Zeichnung zeigt:

Fig. 1    eine Schaltung mit drei Signalverarbeitungskanälen zur Signalkonditionierung;
Fig. 2    einen Signalkanal der Schaltung der Fig. 1;
Fig. 3    einen weiteren Signalkanal der Schaltung der Fig. 1;
Fig. 4    eine in Fig. 1 ebenfalls enthaltene Vergleichsschaltung;
Fig. 5    eine Zeitreihe von Sinus-, Kosinus- und Synchronisationssignal, und
Fig. 6    Zeitreihen von zur Phasendifferenzkorrektur verwendeten Hilfssignalen.

Das erfindungsgemäße Verfahren wird nachfolgend in Ausführungsbeispielen beschrieben, wobei jedesmal orthogonale Sinus- und Kosinus-Signale dahingehend konditioniert werden, daß sie vorbestimmte positive und negative Spitzensollwerte aufweisen.

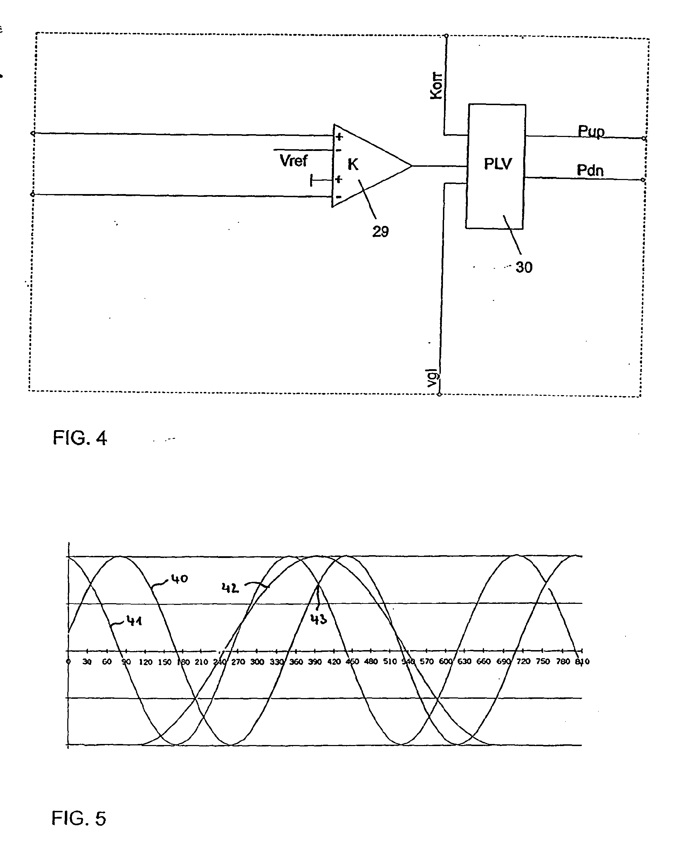

Fig. 5 zeigt Zeitreihen zweier Signale 40 und 41. Dabei handelt es sich um orthogonale Sinus- und Kosinus-Signale. Auf das ebenfalls in der Zeitreihe der Fig. 5 zu sehende Synchronisationssignal 42 wird später gesondert eingegangen. Die Signale 40, 41 stammen von der Abtastung einer Kodescheibe, die bei einem Drehwinkelmeßsystem verwendet wird. Diese Herkunft der Signale 40, 41 ist aber nicht von weiterer Bedeutung; wesentlich für die nachfolgende Beschreibung ist, daß es sich um orthogonale Signale handelt.

Zur Konditionierung werden die Signale durch eine Schaltung geleitet, die am Ausgang entsprechend konditionierte, d. h. auf vorgegebene Spitzensollwerte eingestellte Signale abgibt. In einer der nachfolgend beschriebenen Ausführungsformen haben die am Ausgang abgegebenen Signale darüber hinaus noch einen speziellen Phasenbezug, d. h. die Schaltung führt auch eine Phasenkorrektur durch.

Die nachfolgenden Verfahren dienen der Einstellung der Konditionierungswerte, was verkürzt unter dem Begriff "Konditionierung" zusammengefaßt wird.

In einer ersten Ausführungsform des Verfahrens zur Konditionierung, die nachfolgend als "Tracking"-Verfahren bezeichnet wird, wird der Nulldurchgang eines Signals detektiert, zur vereinfachten Beschreibung sei dies das Signal 41 der Fig. 5. Aufgrund der Orthogonalität des Signales 41 zum Signal 40 zeigt der Nulldurchgang des Signales 41 an, daß das Signal 40 sich im Scheitelpunkt der von ihm durchgeführten Sinus-Schwingung befindet. Im Falle einer von Orthogonalität abweichender Phasendifferenz, führt dieser Phasenfehler nur dazu, daß sich Signal 40 nahe des Scheitelpunktes befindet. Dieser Fehler ist aufgrund der Iterativität des Verfahrens vernachlässigbar. Ob eine positive oder negative Teilperiode bzw. Halbwelle vorliegt, ergibt sich durch einfache Überprüfung der Polarität des Signales 40. Im vorliegenden Fall handelt es sich um eine positive Teilwelle.

Nachdem ein Nulldurchgang des Signales 41 festgestellt wurde, wird das Signal 40 fortwährend mit dem positivem Spitzensollwert verglichen, während das Signal 40 schrittweise an den Spitzensollwert herangeführt wird. Dabei wird jedesmal ein Veränderungsschritt vorgenommen und danach verglichen, ob der Spitzensollwert erreicht wurde.

Jeder Veränderungsschritt ist aus einem additiven und einem multiplikativen Korrekturschritt zusammengesetzt, die simultan ausgeführt werden. Mit jedem Veränderungsschritt wird das Signal 40 also sowohl hinsichtlich des Offsets, bedingt durch den im Veränderungsschritt enthaltenen additiven Korrekturschritt, als auch hinsichtlich des Signalhubes, bedingt durch den im Veränderungsschritt enthaltenen multiplikativen Korrekturschritt, verändert. Da die multiplikativen und additiven Korrekturschritte eine Vergrößerung oder eine Verkleinerung des Spitzenwertes bzw. des Signalpegels bewirken können, sind insgesamt vier verschiedene Veränderungsschritte möglich. Welcher Veränderungsschritt dabei verwendet wird, wird aus der eingangs aufgeführten Tabelle abgeleitet. Im Fall der Fig. 5 handelt es sich, da eine positive Teilperiode vorliegt und der Spitzenistwert unterschritten ist, um einen aus einem vergrößernden multiplikativen Korrekturschritt und einem additiven Korrekturschritt in positiver Richtung aufgebauten Veränderungsschritt.

Diese schrittweise Veränderung wird nun innerhalb der Periode des Signals 40 solange wiederholt, bis der Spitzensollwert erreicht ist. Wesentlich dafür ist natürlich, daß die Abfolge der Veränderungsschritte schnell genug ist. Die Taktfrequenz der Veränderungsschritte muß also groß gegenüber der Signalbandbreite sein, da nur dann davon ausgegangen werden kann, daß tatsächlich ein Spitzenistwert mit dem Spitzensollwert verglichen wird.

Der folgende Nulldurchgang des Signals 40 löst dann einen entsprechenden Abgleich des Signals 41 aus. Hierzu gilt das oben Gesagte entsprechend.

Ist die Bedingung, daß die Taktfrequenz, mit der die Veränderungsschritte ausgeführt werden, groß gegen die Bandbreite des Signals ist, nicht erfüllt, kann eine andere Ausbildung des Verfahrens zum Einsatz kommen, die als "Kompensations-Verfahren" bezeichnet wird. Dabei wird der Spitzenistwert des Signals 40 wie beim Tracking-Verfahren dedektiert und dann in einem Speicherglied gehalten. Anschließend wird ein Referenzsignal, das dem positiven Spitzensollwert entspricht, in Stellschritten auf den gespeicherten Spitzenistwert gestellt. Die Zahl der Stellschritte wird dabei in einem Zähler erfaßt; ebenso wird die Richtung erfaßt. Dieses Verändern des Referenzsignals ausgehend von der Spitzensollspannung auf die Spitzenistspannung erfolgt ausgelöst durch den Nulldurchgang des Signals 41, d. h. den Nulldurchgang des Signals, das zum Signal, dessen Spitzenistwert gespeichert wurde, orthogonal ist. Diese Phase kann als Fehlererfassung bezeichnet werden.

Beim nachfolgenden Nulldurchgang des Signals 40 werden nun genau so viele Veränderungsschritte ausgeführt wie im Zähler abgelegt ist, d. h. es werden genau so viele Veränderungsschritte ausgeführt wie in der zuvor ablaufenden Fehlererfassung Stellschritte nötig waren. Das mit einem Veränderungsschritt ausgeführte Inkrement entspricht dabei im wesentlichen genau dem Inkrement eines Stellschrittes. Wie die Veränderungsschritte aus den oben erwähnten multiplikativen und additiven Korrekturschritten zusammengesetzt sind, ergibt sich zum einen aus der Teilperiode, in der sich das Signal 40 befindet; im vorliegenden Fall ist das die positive Halbperiode. Zum anderen wird die Richtung berücksichtigt, in die das Referenzsignal auf den Spitzenistwert gestellt werden mußte; diese Richtung gibt wieder, ob der Spitzenistwert unter oder über dem Spitzensollwert lag. Es gilt somit wieder der in oben erwähnter Tabelle ausgedrückte Zusammenhang.

Zur Korrektur des Synchronisationssignales 42 wird die Tatsache ausgenutzt, daß das Maximum dieses Signals genau im Schnittpunkt der orthogonalen Signale 40 und 41 liegen soll. Die Einstellung der Konditionierung wird somit für das Synchronisationssignal 42 genau dann ausgelöst, wenn die Signale 40 und 41 den in Fig. 5 gezeigten Schnittpunkt 43 haben und das Signal 42 sich in der positiven Teilperiode befindet. Dabei kann entweder das Tracking-Verfahren oder das Kompensations-Verfahren durchgeführt werden. Der Abgleich des negativen Spitzenistwertes des Synchronisationssignals 42 ist zu jedem beliebigem Zeitpunkt der negativen Teilperiode möglich, was durch die Asymmetrie des Synchronisationssignals bedingt ist. Besonders zweckmäßig ist es jedoch auch hier einen Schnittpunkt zwischen den Signalen 40 und 41 zum Auslösen des Abgleichs zu verwenden, da dann sichergestellt ist, daß das Synchronisationssignal 42 sich in der negativen Halbperiode im negativen Spitzenistwert befindet.

Eine weitere Ausführungsform ermöglicht eine Konditionierung hinsichtlich einer Phasenkorrektur. Dazu wird ein Hilfssignal generiert, aus dessen Amplitudeninformation die Phasenverschiebung ablesbar ist. Die konditionierten Signale 40, 41 werden mit einem Faktor von $\sqrt{2}/2$ bewertet und dann superponiert, wodurch ein neues sinusförmiges Signal entsteht. Die Differenz zwischen dem Spitzenistwert des Hilfssignals und dem Spitzensollwert der Ausgangssignale ist ein Maß für die Phasenablage zwischen den Signalen 40 und 41.

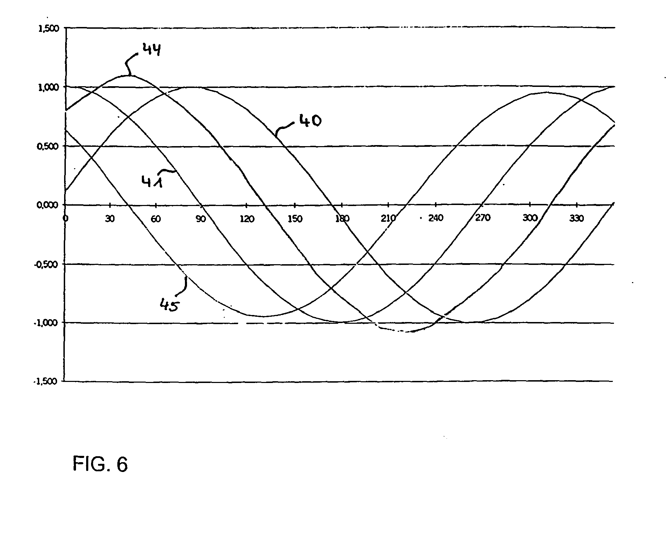

Der Vergleich des Spitzenistwertes dieses Hilfssignales mit dem Spitzensollwert erfolgt dann wie beim Tracking-Verfahren oder beim Kompensations-Verfahren. Gleichzeitig liefert dieser Vergleich auch die Richtung, in der die Phasenablage korrigiert werden muß. Diese Signale sind in Fig. 6 eingetragen, in der das mit 44 bezeichnete Hilfssignal durch Summation von Sinus und Kosinus erhalten wurde, das Hilfssignal 45 durch entsprechende Subtraktion. Beide Hilfssignale können alternativ verwendet werden, da ihr betragsmäßiger Abstand zwischen Spitzenistwert und Spitzensollwert gleich ist, nur das Vorzeichen muß bei der Richtung der Phasenkorrektur entsprechend berücksichtigt werden.

Durch Einführung einer zusätzlichen Phasenverschiebung entweder für das Signal 40 oder für das Signal 41 kann die entsprechende Phasenkorrektur erreicht werden. Zur Korrektur kann eines der beiden Signale willkürlich als Bezugssignale betrachtet werden, demgegenüber das andere Signal hinsichtlich der Phase verstellt werden muß. Die Richtung der Verstellung ergibt sich aus dem Vergleichsergebnis des Hilfssignals.

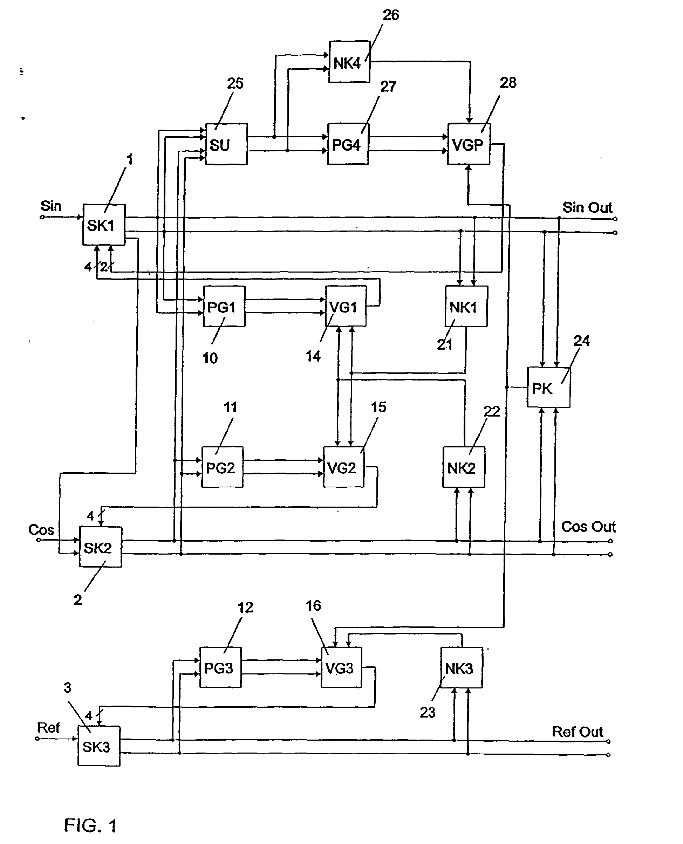

Eine zur Durchführung des Kompensationsverfahrens geeignete Schaltungsanordnung ist in Fig. 1 gezeigt. Sie besteht aus drei im wesentlichen identisch aufgebauten Signalverarbeitungskanälen 1, 2 und 3 (SK1, SK2 und SK3), die das jeweilige Eingangssignal verstärken oder abschwächen und die Pegellage verschieben. In den Kanälen SK1, SK2 und SK3 wird das jeweilige Eingangssignal 40, 41 auf vorgegebene positive und negative Spitzensollwerte eingestellt. Die Kanäle 1 und 2 (SK1 und SK2) dienen dabei der Verarbeitung der beiden sinusförmigen Signale, die in den Figuren auch als Sin und Cos bezeichnet sind; Kanal 3 (SK3) verarbeitet das Synchronisationssignal 42, das in den Figuren als Ref bezeichnet ist.

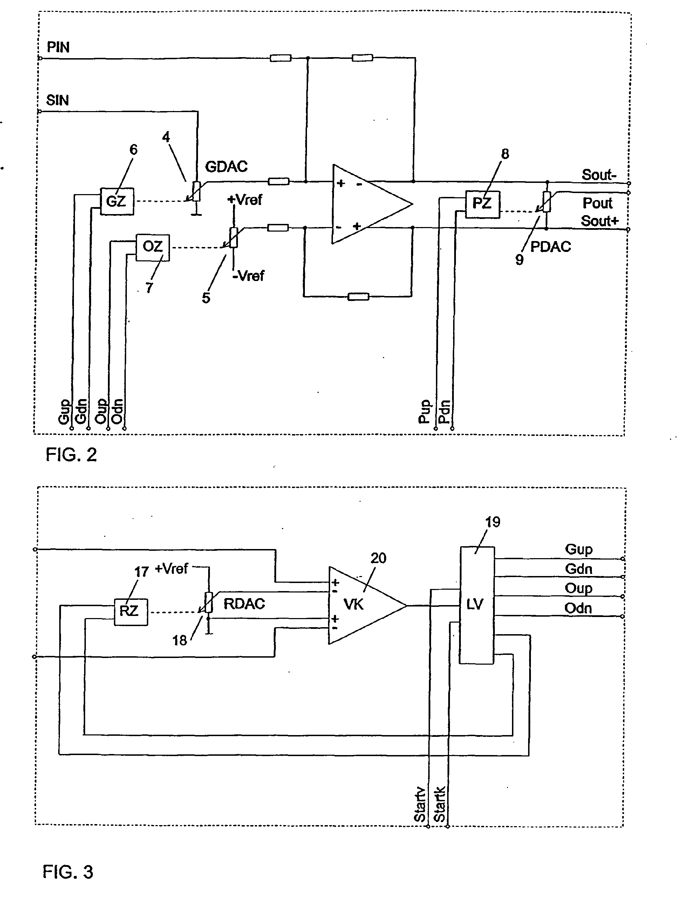

Jeder Kanal (SK1, SK2, SK3) ist, wie in Fig. 2 dargestellt, aufgebaut und verfügt über die Möglichkeit einer in gewissen Grenzen in Inkrementen veränderbarer Verstärkung (Gainstellung) und die Möglichkeit eines in gewissen Grenzen in Inkrementen veränderbaren Pegellage (Offsetstellung) in Abhängigkeit von Signalen an dazu vorhandenen digitalen Eingänge Gup und Gdn bzw. Oup und Odn, die durch Impulse bzw. deren Flanken gesteuert werden. Bei jedem eintreffenden Impuls wird die der Verstärkung bzw. der Offset um jeweils ein Inkrement in die zugeordnete Richtung aufwärts (up) oder abwärts (dn) verstellt. Diese Gain- und Offsetstellglieder sind vorteilhaft durch potentiometrische D/A-Wandler 4, 5 (GDAC, ODAC), die durch Vor-/Rückwärtszähler 6, 7 (GZ, OZ) gesteuert werden, realisiert. Ein Zähler 8 (PZ) ermöglicht zusammen mit dem potentiometrischem D/A-Wandler 9 (PDAC) die Bereitstellung eines in Polarität und Größe steuerbaren Teiles der Ausgangsspannung. Das Eingangssignal wird an den Eingang SIN gelegt. Am Eingang PIN kann ein weiteres Signal angelegt werden, welches dem Ausgangssignal additiv überlagert wird.

An die differentiellen Ausgänge jedes Kanals (SK1, SK2) ist jeweils ein Präzisionsspitzenwertgleichrichter 10, 11, 12 (PG1, PG2, PG3) angeschlossen, der den positiven bzw. negativen Spitzenwert der Signalspannung am Ausgang des jeweiligen Kanalas bis zum nachfolgenden Nulldurchgang als analogen Spannungswert speichert. Zum Zurücksetzen ist ein (nicht dargestellter) Eingang vorhanden.

Drei Vergleichsschaltungen 14, 15, 16 (VG1, VG2 und VG3) sind, wie in Fig. 3 dargestellt, aufgebaut und vergleichen die Ausgangsspannungen der Präzisionsspitzenwertgleichrichter mit einer in Inkrementen veränderbaren Referenzspannung. Dieser Vergleich erfolgt getaktet durch ein an einem (nicht dargestellten) Takteingang zugeführtes Taktsignal. Die zum Vergleich herangezogene, veränderliche Referenzspannung wird vorteilhaft durch einen Zähler 17 (RZ) und einen potentiometrischen D/A-Wandler 18 (RDAC) realisiert. Eine Impulsflanke am Eingang Startv der Vergleichsschaltung löst ausgehend von einem definierten Sollwert der Referenzspannung, der der Mittelstellung des D/A-Wandlers 18 (RDAC) bzw. dem Zählerstand Null des Zählers 17 (RZ) entspricht, eine schrittweise Annäherung der Referenzspannung an die Ausgangsspannung der Präzisionsgleichrichter 10, 11, 12 aus, indem die Logikschaltung 19 (LV) den Zähler 17 (RZ) mit jedem Takt nach dem Impuls an Startv in Abhängigkeit vom logischen Zustand des Ausgangs des Vergleichskomparators 20 (VK) inkrementiert oder dekrementiert. Dies erfolgt solange, bis der Ausgang eines Vergleichskomparators 20 (VK) seinen logischen Zustand ändert. Die Logikschaltung 19 (LV) speichert mit dem Impuls an Startv ebenfalls den logischen Zustand des Eingangs Startk als Polaritätsinformation. Eine Impulsflanke am Eingang Startk löst ausgehend von der aktuellen Stellung des Zählers 17 (RZ) dessen Dekrementierung oder Inkrementierung aus, die solange erfolgt, bis der Zählerstand Null erreicht ist. Die dazu erforderlichen Zählimpulse werden in Abhängigkeit von der Zählrichtung und der gespeicherten Polaritätsinformation an einen der Ausgänge Gup oder Gdn und an einen der Ausgänge Oup oder Odn geleitet.

Drei getaktete Nullspannungskomparatoren 21, 22 und 23 (NK1, NK2, NK3) und ein Pegelkomparator 24 (PK) detektieren die Pegel in den Kanälen und erzeugen zusammen mit einem (hier nicht dargestellten) Taktgenerator die Steuerimpulse Starkv und Startk zur Auslösung der Vergleichs- und der Stellvorgänge der Fehlererfassungs- und der Fehlerkorrekturphase.

Wenn der Nullspannungskomparator 21 (NK1) den Nulldurchgang des Sinussignals im Kanal 1 detektiert, erhält der Eingang Startv der Vergleichsschaltung 15 (VG2) einen Impuls, womit der Prozeß der Fehlererfassung im Signalkanal 2 beginnt. Der so gestartete, getaktete Anpaßvorgang der Referenzspannung an dem vom Präzisionsgleichrichter gehaltenen Wert wird beendet, wenn der Ausgang des Vergleichskomparators 20 umschaltet, d. h. wenn die inkrementierte Referenzspannung den Wert der Ausgangsspannung des Präzisionsgleichrichters PG2 erreicht hat. Der Zählerstand des Zählers RZ2 am Ende des Vorganges repräsentiert die Differenz des Spitzenistwerts des Signals im Kanal 2 vom Spitzensollwert in Form einer Anzahl von Stellschritten.

Detektiert der Nullspannungskomparator NK2 nur einen Nulldurchgang des Kosinussignals im Kanal 2, erhält der Startk-Eingang der Vergleichsschaltung VG2 einen Impuls, womit der Prozeß der Fehlerkorrektur im Signalkanal 2 beginnt, indem der Zähler 17 (RZ2) in entgegengesetzter Richtung bezogen auf den Zählvorgang während des Prozeß der Fehlererfassung bis auf Null gezählt wird. Die dazu notwendigen Taktimpulse werden gleichzeitig den Eingängen Gup oder Gdn und Oup oder Odn des Signalkanals SK2 zugeleitet, so daß dort Gain und Offset verändert werden. Die Richtung der Veränderung (up oder dn) ergibt sich aus der Verknüpfung der Zählrichtung des Zählers 17 (RZ2) mit der Polarität des zuletzt erfaßten Spitzenistwertes der Signalspannung im Kanal 2 so, daß dieser Spitzenistwert dem Spitzensollwert angenähert wird.

Gleichzeitig mit diesem Prozeß der Fehlerkorrektur im Kanal 2 wird der Prozeß der Fehlererfassung im Kanal 1 gestartet (und umgekehrt).

Bei höheren Signalfrequenzen und gleichzeitig hoher Signalablage, kann der Fall eintreten, daß die Länge einer Viertelperiode, vom Nulldurchgang des einen bis zum Nulldurchgang des anderen Signals, für die Fehlererfassung, d. h. die vollständige Annäherung der Referenzspannung an die Ausgangsspannung des Präzisionsgleichrichters, nicht mehr ausreicht. In diesem Fall wird die Fehlererfassung in einem Kanal mit dem Nulldurchgang des anderen Signals beendet und unmittelbar zur Fehlerkorrektur übergegangen. Es wird dann nur eine Teilkorrektur erreicht. Der Abgleichvorgang benötigt zur Vollkorrektur dann mehrere Perioden, abhängig vom Verhältnis zwischen Signalfrequenz und Taktfrequenz.

Die Signalspannung im Kanal 3 ist das erwähnte Synchronisationssignal, welches nicht sinusförmig ist, aber ebenfalls einen positiven und einen negativen Spitzenwert aufweist, die in Analogie zu den sinusförmigen Signalen auf eine definierte Größe und symmetrisch zur Nulllinie einzustellen sind. Ein Unterschied im Korrekturprozeß besteht lediglich in der Gewinnung des Auslöseimpulses Startv für den Kanal 3.

Wenn die Nullspannungskomparatoren 21 und 22 (NK1, NK2) positive Signalpegel in beiden Kanälen detektieren und der Pegelkomparator 24 (PK) die Gleichheit der Signale in Kanal 1 und Kanal 2 anzeigt, erhält der Eingang Startv der Vergleichsschaltung 16 (VG3) einen Impuls, womit der Prozeß der Fehlererfassung im Signalkanal 3 beginnt. Der so gestartete, getaktete Anpaßvorgang der Referenzspannung der Vergleichsschaltung 16 (VG3) an den vom zugeordneten Präzisionsgleichrichter 12 gehaltenen Wert wird beendet, wenn der Ausgang des Komparators umschaltet, d. h. wenn die inkrementierte Referenzspannung den Wert der Ausgangsspannung des Präzisionsgleichrichters 12 (PG3) erreicht hat. Der Zählerstand des Zählers 17 (RZ3) am Ende des Nachlaufprozesses repräsentiert die Differenz des Spitzenwerts des Signals im Kanal 3 und seinem Sollwert in Form einer Anzahl von Inkrementen.

Detektiert der Nullspannungskomparator 23 (NK3) einen Nulldurchgang des Signals im Kanal 3, beginnt der Prozeß der Fehlerkorrektur im Kanal 3, in dem der Zähler 17 (RZ3) in entgegengesetzter Richtung, bezogen auf den Zählvorgang während des Prozesses der Fehlererfassung im Kanal 3, bis auf Null gezählt wird. Die dazu notwendigen Taktimpulse werden gleichzeitig den Eingängen Gup oder Gdn und Oup oder Odn des Kanals 3 (SK3) zugeleitet, so daß in Kanal 3 Gain und Offset verändert werden. Die Richtung der Veränderung (up oder dn) ergibt sich aus der Verknüpfung der Zählrichtung des Zählers 17 (RZ3) mit der Polarität des zuletzt erfaßten Spitzenwertes der Signalspannung im Kanal 3 so, daß dessen Spitzenistwert seinem Spitzensollwert angenähert wird.

Zur Phasenkorrektur ist eine zusätzliche Schaltung zur Gewinnung eines Hilfssignals vorgesehen. Dieses Hilfssignal wird durch analoge Addition der Signale der Kanäle 1 und 2 und Abschwächung des Summensignals mit dem Faktor 0,71 ($\lambda \sqrt{2}/2$) der Summationsschaltung 25 (SU) gebildet. An die Summationsschaltung (sn) schließen sich ein Nullpunktkomparator 26 (NK4), ein Spitzenwertgleichrichter 27 (PG4) und eine Vergleichsschaltung 28 (VGP) an. Die Vergleichsschaltung 28 (VGP) besteht, wie in Fig. 4 gezeigt, aus einem getakteten Komparator 29 (K), dessen Ausgangszustand bei einer Flanke am Eingang vgl als Richtungsinformation in die Logikschaltung 30 (PLV) übernommen wird. Bei einer Flanke am Eingang korr wird in Abhängigkeit von der zuletzt gespeicherten Richtungsinformation ein Impuls an cup oder cdn ausgegeben. Diese Pulse werden dem Zähler 8 (PZ) des Signalkanals 1 zugeleitet, der über den potentiometrischen D/A-Wandler 9 einen Teil des Ausgangssignals des Kanals 1 an den Ausgang POUT leitet. Diese Spannung wird dem Eingang PIN des Signalkanals 2 zugeführt und bewirkt durch Überlagerung eine Phasenverschiebung des Ausgangssignals des Kanals 2. Durch die Begrenzung der Korrekturschrittweite der Phasenkorrektur auf jeweils ein Inkrement wird eine Entkopplung der Regelvorgänge für die Amplituden- und Offsetkorrektur einerseits und die Phasenkorrektur andererseits erreicht.

### Patentansprüche

1. Verfahren zur Konditionierung eines periodischen Analogsignals auf vorbestimmte, positive und negative Spitzensollwerte durch Veränderung des Signals mittels multiplikativer Korrekturschritte, die den Signalhub vergrößern oder verkleinern, und additiver Korrekturschritte, die zum Signal eine den Signalpegel in positiver oder negativer Richtung verändernde Konstante hinzuaddieren, bei dem

   a) das Vorliegen eines aktuellen Spitzenistwertes detektiert wird, und
   b) die Differenz zwischen Spitzenistwert und vorbestimmtem Spitzensollwert schrittweise durch mehrmalige Veränderung des Signals mittels Veränderungsschritten verringert wird, **dadurch gekennzeichnet, daß**
   c) jeder Veränderungsschritt genau einen multiplikativen und genau einen additiven Korrekturschritt beinhaltet, und
   d) die Schrittweise Veränderung innerhalb einer Teilperiode des Signals stattfindet.

2. Verfahren nach Anspruch 1, **dadurch gekennzeichnet, daß** die Veränderungsschritte nach Detektion eines aktuellen Spitzenistwerts unmittelbar auf das Signal wirken und die Veränderungsschritte

   - bei einem in einer positiven Teilperiode des Signals über dem Spitzensollwert liegenden Spitzenistwert einen verkleinernden multiplikativen Korrekturschritt und einen additiven Korrekturschritt in negativer Richtung,
   - bei einem in einer positiven Teilperiode des Signals unter dem Spitzensollwert liegenden Spitzenistwert einen vergrößemden multiplikativen Korrekturschritt und einen additiven Korrekturschritt in positiver Richtung,
- bei einem in einer negativen Teilperiode des Signals über dem Spitzensollwert liegenden Spitzenistwert einen verkleineerden multiplikativen Korrekturschritt und einen additiven Korrekturschritt in positiver Richtung,
- bei einem in einer negativen Teilperiode des Signals unter dem Spitzensollwert liegenden Spitzenistwert einen vergrößernden multiplikativen Korrekturschritt und einen additiven Korrekturschritt in negativer Richtung aufweisen.

3.  Verfahren nach Anspruch 1 oder 2, **dadurch gekennzeichnet, daß** nach Schritt a) ein Referenzsignal ausgehend vom vorbestimmten Spitzensollwert schrittweise auf den Spitzenistwert gestellt wird, wobei die Zahl der nötigen Stellschritte gezählt wird und danach das zu konditionierende Signal um ebensoviele Veränderungsschritte verändert wird, wobei die Größe eines Veränderungsschrittes der eines Stellschrittes entspricht.

4.  Verfahren nach einem der obigen Ansprüche, **dadurch gekennzeichnet, daß** die Veränderungsschritte mit einer Frequenz ausgeführt werden, die größer als die Signalbandbreite ist.

5.  Verfahren nach einem der obigen Ansprüche, **dadurch gekennzeichnet, daß** der detektierte Spitzenwert zwischengespeichert wird, vorzugsweise in einem Sample-and-hold-Glied.

6.  Verfahren nach einem der obigen Ansprüche zur Konditionierung zweier um 90° phasenverschobener alternierender Signale, **dadurch gekennzeichnet, daß** der Spitzenistwert des einen Signals durch einen Nulldurchgang des anderen Signals erkannt wird.

7.  Verfahren nach einem der obigen Ansprüche in Verbindung mit Anspruch 3, **dadurch gekennzeichnet, daß** die Ausführung der Veränderungsschritte im Nulldurchgang des Signals erfolgt.

8.  Vorrichtung zur Konditionierung eines periodischen Analogsignals auf vorbestimmte, positive und negative Spitzensollwerte mit:

    - einer Amplituden- und Offsetstelleinrichtung (1), der das Signal (SIN, COS) zugeführt ist und die an ihrem Ausgang das Signal (SIN, COS) verstärkt oder abgeschwächt und mit erhöhtem oder erniedrigtem Signalpegel abgibt,
    - einem Spitzenwertdetektor (10, 11), der das Signal (SIN, COS) zugeführt erhält und der am Ausgang den letzten Spitzenistwert solange abgibt, bis er über einen Rücksetzeingang zurückgesetzt wird,
    - einer über einen Steuereingang verstellbaren Referenzspannungsquelle (14, 15), **gekennzeichnet durch**
    - eine Steuerschaltung (14, 15, 21, 22), die mit dem Steuereingang der Referenzspannungsquelle (14, 15) verbunden ist, diese in Stellschritten von einem vorbestimmten, dem Spitzensollwert entsprechendem Wert auf den vom Spitzenwertdetektor (10, 11) am Ausgang abgegebenen Spitzenistwert verstellt, die Zahl und Richtung der Stellschritte in zwei Speicherelementen speichert und dann die Amplituden- und Offsetstellvorrichtung (1) abhängig von der gespeicherten Zahl und Richtung schrittweise innerhalb einer Teilperiode des Signals simultan verstellt.

9.  Vorrichtung nach Anspruch 8, **gekennzeichnet durch** einen Vergleichskomparator (20), der mit dem Ausgang der Referenzspannungsquelle (14, 15) und des Spitzenwertdetektors (10, 11) und mit der Steuerschaltung (14, 15, 21, 22) verbunden ist.

10. Vorrichtung nach Anspruch 8 oder 9, **dadurch gekennzeichnet, daß** sie zur Könditionierung zweier Analogsignale (SIN, COS) für jedes Signal (SIN, COS) je eine Amplituden- und Offsetstellvorrichtung (1, 2) und einen Spitzenwertdetektor (10, 11) aufweist.

11. Vorrichtung nach einem der Ansprüche 8 bis 10, **dadurch gekennzeichnet, daß** sie zur Konditionierung zweier orthogonaler Analogsignale (SIN, COS) für jedes Signal einen Nullwertdetektor (21, 22) aufweist, dessen Nullwertdetektion eines Signals (SIN, COS) zur Anzeige eines Spitzenwertes des anderen Signales (COS, SIN) dient.

12. Vorrichtung nach Anspruch 10, **dadurch gekennzeichnet, daß** sie zur Konditionierung dreier Analogsignale SIN, COS, REF) eine weitere Amplituden- und Offsetstellvorrichtung (3), einen weiteren Spitzenwertdetektor (12), einen weiteren Nullwertdetektor (23), eine weitere verstellbare Referenzspannungsquelle sowie eine weitere Steuerschaltung (16) sowie einen Pegelkomparator (24), dem die beiden ersten Signale (SIN, COS) zugeführt werden, wobei die Steuerschaltung (16) die weitere Referenzspannungsquelle (16) erst dann auf den vom Spitzenwertdetektor (12) abgegebenen Spitzenistwert stellt, wenn der Pegelkomparator (24) gleichen Pegel der beiden Signale (SIN, COS) anzeigt.

**Claims**

1. A method for conditioning a periodic analog signal to predetermined, positive and negative setpoint peak values by changing the signal by means of multiplicative correction steps, which increase or decrease the signal amplitude, and additive correction steps, which add to the signal a constant, which changes the signal level in positive or negative direction, in the case of which

   a) the existence of a current actual peak value is detected and
   b) the difference between actual peak value and predetermined setpoint peak value is decreased gradually by changing the signal several times by means of changing steps, **characterized in that**
   c) each changing step includes exactly one multiplicative and exactly one additive correction step and
   d) the gradual change takes place within a partial period of the signal.

2. The method according to claim 1, **characterized in that** the changing steps act directly on the signal after detecting a current actual peak value and the changing steps encompass

   - a reductive multiplicative correction step and an additive correction step in negative direction in the case of an actual peak value, which lies above the setpoint peak value in a positive partial period of the signal,
   - an enlarging multiplicative correction step and an additive correction step in positive direction in the case of an actual peak value, which lies below the setpoint peak value in a positive partial period of the signal,
   - a reducing multiplicative correction step and an additive correction step in positive direction in the case of an actual peak value, which lies above the setpoint peak value in a negative partial period of the signal,
   - an increasing multiplicative correction step and an additive correction step in negative direction in the case of an actual peak value, which lies below the setpoint peak value in a negative partial period of the signal.

3. The method according to claim 1 or 2, **characterized in that**, according to step a), a reference signal is gradually adjusted to the actual peak value, based on the predetermined setpoint peak value, wherein the number of the required adjusting steps is counted and the signal, which is to be conditioned, is thereafter changed by the same amount of changing steps, wherein the size of a changing step corresponds to the size of an adjusting step.

4. The method according to one of the above claims, **characterized in that** the changing steps are carried out with a frequency, which is greater than the signal bandwidth.

5. The method according to one of the above claims, **characterized in that** the detected peak value is buffered, preferably in a sample-and-hold member.

6. The method according to one of the above claims for conditioning two alternating signals, which are phase-shifted by 90°, **characterized in that** the actual peak value of the one signal is identified by a zero crossing of the other signal.

7. The method according to one of the above claims in combination with claim 3, **characterized in that** the execution of the changing steps takes place in the zero crossing of the signal.

8. A device for conditioning a periodic analog signal to predetermined positive and negative setpoint peak values comprising:

   - an amplitude and offset control device (1), to which the signal (SIN, COS) is supplied and which outputs the signal (SIN, COS) at its output either amplified or weakened and with increased or decreased signal level,
   - a peak value detector (10, 11), to which the signal (SIN, COS) is supplied and which outputs the last actual peak value at the output until it is reset via a reset input,
   - a reference voltage source (14, 15), which can be adjusted via a control input, **characterized by**
   - a control circuit (14, 15, 21, 22), which is connected to the control input of the reference voltage source (14, 15), adjusts them in adjusting steps from a predetermined value, which corresponds to the setpoint peak value, to the actual peak value, which is output by the peak value detector (10, 11) at the output, stores the number and direction of the adjusting steps in two memory elements and then gradually simultaneously adjusts the amplitude and offset adjusting device (1) as a function of the stored number and direction within a partial period of the signal.

9. The device according to claim 8, **characterized by** a reference comparator (20), which is connected to the output of the reference voltage source (14, 15) and of the peak value detector (10, 11) and to the control circuit (14, 15, 21, 22).

10. The device according to claim 8 or 9, **characterized in that** it encompasses one amplitude and offset adjusting device (1, 2) and one peak value detector (10, 11) in each case for each signal (SIN, COS) for conditioning two analog signals (SIN, COS).

11. The device according to one of claims 8 to 10, **characterized in that** it encompasses a zero value detector (21, 22) for each signal, the zero value detection of which of a signal (SIN, COS) serves to display a peak value of the other signal (COS, SIN) for conditioning two orthogonal analog signals (SIN, COS).

12. The device according to claim 10, **characterized in that** it encompasses a further amplitude and offset adjusting device (3), a further peak value detector (12), a further zero value detector (23), a further adjustable reference voltage source, as well as a further control circuit (16), as well as a level comparator (24), to which the two first signals (SIN, COS) are supplied, for conditioning three analog signals (SIN, COS, REF), wherein the control circuit (16) adjusts the further reference voltage source (16) to the actual peak value, which is output by the peak value detector (12), only when the level comparator (24) displays the same levels of the two signals (SIN, COS) .

### Revendications

1. Procédé pour le conditionnement d'un signal analogique périodique sur des valeurs de crête théoriques positives et négatives prédéterminées, par la modification du signal au moyen d'étapes de correction multiplicative augmentant ou diminuant l'excursion du signal, et d'étapes de correction additive, ajoutant au signal une constante modifiant le niveau de signal dans le sens positif ou négatif, dans lequel

a) la présence d'une valeur de crête réelle actuelle est détectée, et
b) la différence entre la valeur de crête réelle et la valeur de crête théorique prédéterminée est réduite graduellement, par plusieurs modifications du signal au moyen d'étapes de modification,
**caractérisé en ce que**
c) chaque étape de modification contient exactement une étape de correction multiplicative et exactement une étape de correction additive, et
d) la modification graduelle a lieu dans une sous-période du signal.

2. Procédé selon la revendication 1, **caractérisé en ce que** les étapes de modification agissent directement sur le signal après la détection d'une valeur de crête réelle actuelle, et **en ce que** les étapes de modification

- comprennent une étape de correction multiplicative de diminution et une étape de correction additive dans le sens négatif, avec une valeur de crête réelle supérieure à la valeur de crête théorique dans une sous-période de signal positive,
- comprennent une étape de correction multiplicative d'augmentation et une étape de correction additive dans le sens positif, avec une valeur de crête réelle inférieure à la valeur de crête théorique dans une sous-période de signal positive,
- comprennent une étape de correction multiplicative de diminution et une étape de correction additive dans le sens positif, avec une valeur de crête réelle supérieure à la valeur de crête théorique dans une sous-période de signal négative,
- comprennent une étape de correction multiplicative d'augmentation et une étape de correction additive dans le sens négatif, avec une valeur de crête réelle inférieure à la valeur de crête théorique dans une sous-période de signal négative.

3. Procédé selon la revendication 1 ou 2, **caractérisé en ce qu'**après l'étape a), un signal de référence est graduellement réglé sur la valeur de crête réelle, à partir de la valeur de crête théorique prédéterminée, le nombre d'étapes de réglage nécessaires étant compté et le signal à conditionner étant ensuite modifié du même nombre d'étapes de modification, la grandeur d'une étape de modification correspondant à celle d'une étape de réglage.

**4.** Procédé selon l'une des revendications précédentes, **caractérisé en ce que** les étapes de modification sont exécutées avec une fréquence supérieure à la largeur de bande du signal.

**5.** Procédé selon l'une des revendications précédentes, **caractérisé en ce que** la valeur de crête détectée est temporairement sauvegardée, de préférence dans un élément « Sample-and-hold ».

**6.** Procédé selon l'une des revendications précédentes, pour le conditionnement de deux signaux alternants, décalés en phase de 90°, **caractérisé en ce que** la valeur de crête réelle de l'un des signaux est reconnue par le retour à zéro de l'autre signal.

**7.** Procédé selon l'une des revendications précédentes, en association avec la revendication 3, **caractérisé en ce que** l'exécution des étapes de modification a lieu lors du passage par zéro du signal.

**8.** Dispositif pour le conditionnement d'un signal analogique périodique sur des valeurs de crête théoriques négatives et positives prédéterminées, avec :

- un dispositif de réglage offset et d'amplitude (1), auquel est transmis le signal (SIN, COS), et qui émet à sa sortie le signal (SIN, COS) amplifié ou affaibli, avec un niveau de signal relevé ou diminué,
- un détecteur de valeurs de crête (10, 11), maintenant le signal (SIN, COS) transmis, qui émet à sa sortie la dernière valeur de crête réelle jusqu'à ce qu'elle soit réinitialisée par une entrée de remise à zéro,
- une source de tension de référence (14, 15) réglable par une entrée de commande,
**caractérisé en ce que**
- un circuit de commande (14, 15, 21, 22) relié à l'entrée de commande de la source de tension de référence (14, 15), réglant celle-ci par étapes de réglage, d'une valeur correspondant à la valeur de crête théorique prédéterminée à une valeur de crête réelle délivrée à la sortie par le détecteur de valeurs de crête (10, 11), mémorisant la grandeur et le sens des étapes de réglage dans deux mémoires, et réglant ensuite simultanément le dispositif de réglage offset et d'amplitude (1) en fonction de la grandeur et du sens mémorisés, par étapes, dans une sous-période du signal.

**9.** Dispositif selon la revendication 8, **caractérisé par** un comparateur (20) relié à la sortie de la source de tension de référence (14, 15) et du détecteur de valeurs de crête (10, 11), ainsi qu'au circuit de commande (14, 15, 21, 22).

**10.** Dispositif selon la revendication 8 ou 9, **caractérisé en ce que** pour le conditionnement de deux signaux analogiques (SIN, COS), il comporte un dispositif de réglage offset et d'amplitude (1, 2) et un détecteur de valeurs de crête (10, 11) pour chaque signal (SIN, COS).

**11.** Dispositif selon l'une des revendications 8 à 10, **caractérisé en ce que** pour le conditionnement de deux signaux analogiques orthogonaux (SIN, COS), il comporte un détecteur de valeur zéro (21, 22) pour chaque signal, dont la détection de valeur zéro d'un signal (SIN, COS) sert à l'affichage d'une valeur de crête de l'autre signal (SIN, COS).

**12.** Dispositif selon la revendication 10, **caractérisé en ce que** pour le conditionnement de trois signaux analogiques (SIN, COS, REF), sont ajoutés un nouveau dispositif de réglage offset et d'amplitude (3), un nouveau détecteur de valeurs de crête (12), un nouveau détecteur de valeur zéro (23), une nouvelle source de tension de référence réglable, ainsi qu'un nouveau circuit de commande (16) et un nouveau comparateur de niveau (24), auquel sont transmis les deux premiers signaux (SIN, COS), dans lequel le circuit de commande (16) règle la nouvelle source de tension de référence (16) sur la valeur de crête réelle délivrée par le détecteur de valeurs de crête (12) seulement lorsque le comparateur de niveau (24) affiche le même niveau pour les deux signaux (SIN, COS).

FIG. 1

FIG. 2

FIG. 3

EP 1 207 372 B1

**FIG. 4**

**FIG. 5**

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3843108 C
- US 4458322 A
- EP 0489936 A
- DE 19712622 A
- DE 4242145 A
- EP 0599175 A
- DE 19548172 A
- WO 0060314 A